# EUROPEAN PATENT APPLICATION

(11) **EP 3 432 144 A1**
(43) Date of publication of application: **23.01.2019**
(21) Application number: 17182388.3
(22) Date of filing: 20.07.2017
(51) Int. Cl.: G06F 9/455, G06F 9/44

(54) **A COMPUTER-IMPLEMENTED METHOD AND SYSTEM FOR AUTOMATICALLY RECOMMENDING A CODE MODIFICATION**

(71) Applicant: Fujitsu Limited, Kawasaki-shi, Kanagawa 211-8588 (JP)
(72) Inventor: ALDEA LOPEZ, Sergio, London, W13 9AS (GB)
(74) Representative: Haseltine Lake LLP

(57) **Abstract**

A computer-implemented method for automatically recommending a code modification, comprising: loading a piece of code for optimisation; finding the similarity of the piece of code for optimisation to entities stored in a repository, entities in the repository comprising an original piece of code and a temporal sequence of modified versions of the code over time, each with a performance result; selecting from the repository one or more entities which are similar to the piece of code for optimisation; and generating a recommendation for code optimisation by comparing the performance results of the modified code versions in the temporal sequences of the similar entities to find a modification with the best performance results.

## Description

The present invention relates to analysis and improvement of code/software and is applicable in at least High Performance Computing (HPC) environments.

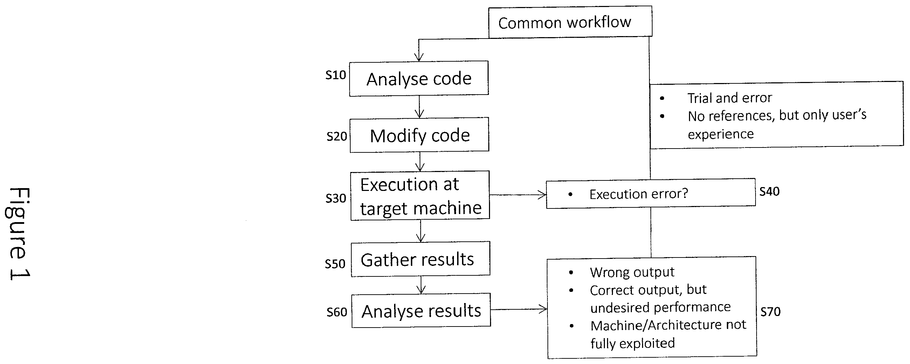

Performance tuning, optimization and/or parallelization tasks are time consuming, trial-and-error processes, and, often, very tedious. In the worst case scenario, if the programmer has not written the source code, understanding how it works is rather complicated. Figure 1 shows the common workflow, with some generalized steps, that a programmer has to follow in order to achieve the mentioned tasks.

In step S10 the code is analysed by the programmer. In step S20 the code is modified, and then potentially compiled. Execution is at step S30 and this may lead to an execution error at step S40 and thus no useful results. If there are results these are gathered in step S50 and analysed in step S60. Potential outcomes of the material code are shown in step S70. This is a trial and error process and thus loops round to the first step again until there is a satisfactory output and performance and exploitation of the machine/architecture.

The present invention refers to machines and computers. The term "machine" is sometimes seen as a more general word, which usually refers to the hardware or form factor, hence encompassing not only what is usually understood under computer (desktops, servers, workstations), but also all sorts of intelligent devices: smartphones, tablets, loT devices, embedded systems, etc. Indeed, these devices are none other than computers with different form factors or specific hardware and all these different machines may be used for implementation of invention embodiments.

In any case, the process of modifying the source code depends heavily on the experience of the user/programmer. In the best scenario, if the user is experienced, he has some knowledge that he may leverage in order to apply some optimisations, although the results might not be the expected. In the worst case scenario, the user does not know what to do, or where to start from. This necessary knowledge may be found after a quick search on the Internet, but, in many cases, the lack of practical examples, or just examples that are not similar enough to the problem in question make these tuning, optimisation and/or parallelisation tasks a real challenge. In short, experience from a trained and knowledgeable user is difficult to transfer.

According to an embodiment of a first aspect of the invention, there is provided a computer-implemented method for automatically recommending a code modification, comprising: loading a piece of code for optimisation; finding the similarity of the piece of code for optimisation to entities stored in a repository, entities in the repository comprising an original piece of code and a temporal sequence of modified versions of the code over time, each with a performance result; selecting from the repository one or more entities which are similar to the piece of code for optimisation; and generating a recommendation for code optimisation by comparing the performance results of the modified code versions in the temporal sequences of the similar entities to find a modification with the best results.

Hence embodiments provide a method which automatically recommends a code modification. At that stage the code may be changed using the modification or there may be a user decision as to whether the recommended modification is used or not (in which case it may be more accurately termed a determined or designated code modification). Embodiments require a piece of code to be loaded for consideration but this loading may simply be a software instruction transferring the code for optimisation into the relevant part of the program executing the method or into a new program implementing the recommendation. The next step is calculation of the similarity of the code for optimisation to entities stored in a repository. It should be noted that the piece of code may be an entire program, or more likely a region of code, for example a section of code, with a certain functionality or even the part of the program providing all of the functionality.

The repository may be local or accessible over a network. It stores entities each in the form of an original piece of code and, once there are modifications, a temporal sequence of modified versions of the code over time. Each modified version will include a performance result and the original piece of code may also include a performance result. This is a result of execution of the code and relates to parameters of execution of the code and/or functionality of the code. On the basis of the similarity calculation, one or more entities are selected from the repository. These are entities which are similar to the piece of code for optimisation. Similarity may be calculated on the basis of the original piece of code and/or on the basis of the modified versions.

Once the selected entities are available, a recommendation is generated by taking into account the performance results of the modified code versions and picking the modification with the best performance results. The reader will appreciate that the best results may be those with a fastest execution time for example or if more than one performance result is taken into consideration, any combination of performance results threshold or rating.

The method may further comprise modifying the code for optimisation using the recommended modification; generating combinations of compiler and/or execution-time parameters for the modified code; executing the modified code with the combinations of compiler and/or execution time parameters and monitoring the performance results of the executions; storing the combinations of compiler and/or execution time parameters and their performance results on the modified code in the repository to create multiple entries for the modified code as multiple entries for a new code version in a temporal sequence; and recommending (or designating) a combination of compiler and/or execution time parameters for the modified code which gives the best performance results.

Hence the modified code may be stored as multiple entries each with a different combination of compiler- and execution- time parameters. Not only does this allow a comparison of performance results of these different parameters, it also allows the results of each combination to be saved in the repository for use in future recommendations. In particular, a combination which may not give the best results in one set of circumstances may be a preferable option in another and thus it is useful to store the results of each combination along with the combination. The final recommendation (or designation if there is automatic implementation) in this embodiment is not only the recommended modified code but also the recommended combination of compiler- and/or execution-time parameters.

The possible different combinations available may be selected from any available compiler options, libraries, architectures and environmental variables.

These available different combinations for the modified code execution may be retrieved from a technical knowledge repository.

Incidentally, in a case in which the method takes place on a local machine and a plurality of target machines, the code may be modified on the local machine and the combinations of compiler and/or execution-time parameters may be generated on the local machine. The modification and appropriate combinations for each target machine may be sent to the target machine which may re-compile and execute the modified code, to provide the performance results, sending the performance results to the local machine and/or directly to the repository. The local machine is then responsible for the recommendation of the compiler and/or execution-time parameters along with the modified code.

It may be useful for each modification to be labelled by the user/programmer for future reference. Hence the method may further comprise accepting and storing input of a user label for the recommended modification, the user label categorising the modification. Equally, it may be helpful for the user to receive suggestions as to appropriate user labels. The method may further comprise suggesting one or more user labels to the user according to user labels of the modifications stored with the selected entities (by suggesting all of those previous labels).

The recommendation is made according to the best results. The skilled reader would appreciate that the "best" results may be judged in a number of ways, over a single performance result or a combination of performance results; using thresholding to provide a set of best results with more than one recommendation, or by a combination of multiple criteria with or without thresholds.

In one embodiment the recommendation for code optimisation is generated based on a weighted function combining multiple criteria, including performance results or performance improvement results over the previous code version. For example execution time may be given a higher weighting than power consumption (or improvement in execution time may be given a higher rating than lowering of power consumption). There are many performance results which may be applicable in different circumstances and the choice whether to use the performance results themselves or improvement in performance results is also individual. In many embodiments the performance results or performance improvement results are defined in terms of one or more of execution time, memory usage and power consumption.

It may be useful to remove modified code versions which are unlikely to be suitable. Hence the method may further comprise filtering the modified code versions of the selected pieces of code before generating the recommendation, to eliminate one or more of: results on architectures different from the architecture on which the code for optimisations executes; and negative results which are worse than those of the preceding code version in the temporal sequence.

Before the repository may contain the modified code versions and performance thereof, the original code needs to loaded into the repository. The method may therefore further comprise adding a new piece of code into the repository by creating a new entity. For the purpose of this invention, an entity may comprise an original piece of code, its compiler and/or execution-time parameters (and optionally its performance result), and any different versions of the code, created afterwards by the user following provided recommendations, each of them also encompassing compiler and/or execution-time parameters (and optionally performance results) A new entity will not, in general, include the different versions.

According to an embodiment of a second aspect of the invention there is provided an apparatus for automatically recommending a code modification, comprising: an interface to load a piece of code for optimisation; a processor to: find the similarity of the piece of code for optimisation to entities stored in a repository, entities in the repository comprising an original piece of code and a temporal sequence of modified versions of the code over time, each with a performance result; select from the repository one or more pieces of code/entities which are similar to the piece of code for optimisation; and generate a recommendation for code optimisation by comparing the performance results of the modified code versions in the temporal sequences of the similar entities to find a modification with the best performance results.

This apparatus aspect corresponds to the previously defined method aspect. The apparatus may be a local machine and the performance results may be provided to the repository from the local machine or from a target machine where code is executed remotely. There is also provided a computer program which when executed on a computer carries out a method according to any of the preceding method claims.

The code recommendation may be implemented as part of a more extensive procedure for comparing the results on a plurality of target machines of modification of a region of original code.

According to an embodiment of a third aspect of the invention there is provided a computer-implemented method at a local machine for comparing the results on a plurality of target machines of modification of a region of original code, the method comprising: annotating a region of original code in a program for extraction with a compiler directive; distributing the program to the target machines; allowing compilation of code including the original code and the compiler directive, and generation of executable code in the form of extracted code and instrumented code at each target machine, wherein the compiler directive causes the annotated region of the original code to be extracted, stored in a separate file, and linked to a function call at a position in the original code from which the extracted region was extracted; recommending a code modification for the extracted code according to any of the preceding method statements; modifying the extracted code according to the recommendation and sending the modification to the target machines, triggering re-compilation of the modified extracted code at each target machine to generate a new executable version of the extracted code in each target machine for dynamic loading into the instrumented program; receiving from each target machine the results of the target machine executing the instrumented program and dynamically loading and executing the new executable version of the extracted code; and displaying the results of the target machines to allow determination of the effects of the modification on the results from the different target machines.

According to an embodiment of a fourth aspect of the invention there is provided a local machine operable to compare the results on a plurality of target machines of modification of a region of original code, wherein: the local machine comprises an apparatus as previously described, a user interface and a local network interface controlled by a local processor, wherein: the user interface is to allow annotation by the user of a region of original code in a program for extraction with a compiler directive; and the local network interface is to distribute the program from the local machine to the target machines allowing compilation of code including the original code and the compiler directive, and generation of executable code in the form of extracted code and instrumented code at each target machine, wherein the compiler directive causes the annotated region of the original code to be extracted, stored in a separate file, and linked to a function call at a position in the original code from which the extracted region was extracted; the apparatus as previously described is to recommend a code modification for the extracted code; the user interface is to allow user modification of the extracted code according to the recommendation, to send the modification to the target machines; and to receive the results of execution at each target machine; and the user interface is to display the results for comparison by the user.

Thus the local machine may also carry out the annotation of the original code distribution of the program to target machines and the modification of extracted code caused by the compiler directive in addition to displaying results received from the target machine and recommending the code modification.

An apparatus or computer program according to preferred embodiments of the present invention may comprise any combination of the method aspects. Methods or computer programs according to further embodiments may be described as computer-implemented in that they require processing and memory capability.

The apparatus according to preferred embodiments is described as configured or arranged to, or simply "to" carry out certain functions. This configuration or arrangement could be by use of hardware or middleware or any other suitable system. In preferred embodiments, the configuration or arrangement is by software.

Thus according to one aspect there is provided a program which, when loaded onto at least one computer configures the computer to become the apparatus according to any of the preceding apparatus definitions or any combination thereof.

According to a further aspect there is provided a program which when loaded onto the at least one computer configures the at least one computer to carry out the method steps according to any of the preceding method definitions or any combination thereof.

In general the computer may comprise the elements listed as being configured or arranged to provide the functions defined. For example this computer may include memory, processing, and a network interface.

The invention may be implemented in digital electronic circuitry, or in computer hardware, firmware, software, or in combinations of them. For example, the target machine may be an loT device such as a sensor, as discussed in more detail hereinafter. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims. For example, the steps of the invention may be performed in a different order and still achieve desirable results.

Elements of the invention have been described using the terms "processor", "interface" etc. The skilled person will appreciate that such terms and their equivalents may refer to parts of the system that are spatially separate but combine to serve the function defined. Equally, the same physical parts of the system may provide two or more of the functions defined.

Preferred features of the present invention will now be described, purely by way of example, with references to the accompanying drawings, in which:-
Figure 1 is a flow chart for tuning, optimisation and/or parallelisation tasks;
Figure 2 is a flow chart of a method according to an overall embodiment;
Figure 3 is a block diagram of an apparatus according to an overall embodiment;
Figure 4 is a flow chart of the method including generating combinations of the execution-time parameters and updating the repository;
Figure 5 is a flow chart and conceptual diagram showing a process of retrieval of similar codes;
Figure 6 is a flow chart and conceptual diagram showing a process flow that automatically provides the modification recommended to the user;
Figure 7 is a flow chart and conceptual diagram showing a process flow for the automatic generation of combinations of execution-time parameters, and their corresponding execution and generation of results;
Figure 8 is a process to add a new modification to an existing code in a temporal line or sequence;
Figure 9 is a process to add a new entity or code into the repository;
Figure 10 is a process flow for the automatic recommendation of the best combination of compiler- and execution-time parameters for the current;
Figure 11 is a repository structure;
Figure 12 is a conceptual diagram of structure for each modified code version in the repository;
Figure 13 is an example of a temporal sequence in the repository, in which a piece of code has been modified twice with different performance results;
Figure 14 is a block diagram of a system for comparing the results of code modification on target machines; and
Figure 15 is a block diagram of a hardware implementation of one embodiment.

Source code repositories are usually implemented as version control systems, such as GitHub (a well-known web-based version control repository), where users may manage different versions, or branches of the code, and have the possibility of restoring previous versions. However, these solutions are provided only from a programmatic perspective, and do not pay much attention to the rest of the cycle in the modification of the code, its execution and subsequent results gathering. Therefore, although users may comment each time code is added to the system, these systems are not structured in such a way that users may fully describe any changes made, keep their absolute or relative performance, or even the result of the compilation and/or execution process.

Code repositories may also be found at the core of code search engines, such as Google's Code Search, Krugle, Koders, OpenHub, or Merobase, which allow users to find similar code to the one submitted. These engines apply algorithms to detect similarities between codes, functionality that may also be used for plagiarism detection, see Prechelt, L., Malpohl, G. and Philippsen, M., 2002. Finding plagiarisms among a set of programs with JPlag. J. UCS, 8(11), p.1016 and Aiken, A., 2005. Moss: A system for detecting software plagiarism, University of California-Berkeley.

However, these solutions have a limitation: they only show a final version of the matched (similar) code. Users may compare their codes to the matched codes, but the possibilities beyond that are limited. For example, it is not possible to check the temporal evolution of the changes in the code, or the performance of the different metrics.

There is no known solution that integrates both the temporal evolution of the code with different information and metrics, with the final goal of aiding the tuning, optimisation and/or parallelisation tasks. Moreover, there is no proposed method for automatic recommendation, nor generation of results to automatically populate the repository with extra cases.

The inventor has come to the realisation that a solution to help code development is to keep temporal records of pieces of code, as well as performance metrics for each modification, and potentially other data regarding compilation-time and execution-time variables. Embodiments describe a way of keeping this information in a repository, together with a method and system that is able to handle this repository, create new entries, or update existing ones. Using this historical data, embodiments automatically create a recommendation, providing programmers with enough information to aid them in the processes of tuning, optimisation and/or parallelisation tasks. Some simple modifications, especially when there is a high grade of similarity between both codes, could be automated. However, a fully automation of all code modifications is a far more challenging problem, which is beyond the scope of this invention. Embodiments may recognise a predetermined high level of similarity between the codes and carry out automatic modification, and otherwise create a recommendation. Additionally, embodiments may provide a self-populated repository in which new entries are automatically generated using multiple combinations of the different parameters with which the code is compiled and run (executed).

Embodiments propose a method and system that automatically recommend a code optimisation to the developer based on historical data, both collected by previous developers and automatically generated by the system. This way, the system aids programmers in the development of new and/or existing code by providing access to a code repository in which the different temporal evolutions of different pieces of code are recorded. Each piece of code is stored in this repository together with additional information, which for example includes different performance metrics, data record at compilation and execution time, as well as user-defined labels that describe the series of modification applied to the code. The data record in this context refers to the processes to record the values of certain environment variables, performance results, etc. All data that is recorded in both compilation and execution time may later be added to the repository.

Moreover, further embodiments also propose a method to self-populate the repository. This way, given a certain modification of the code, several combinations of possible architecture-, compiler-, library-, and environment-based options are iterated to generate performance results for each of these combinations, effectively populating the repository with variations of how the code may be realised.

Embodiments may be used by anyone who has to develop a new source code, or update an existing one. Users (programmers) may accelerate development and testing, while benefiting from the pool of temporal records of similar codes. In the process, programmers may gain a better understanding of the behaviour of their code, contrast their solutions with others, and contribute to the actual repository with new examples, modifications and optimisations.

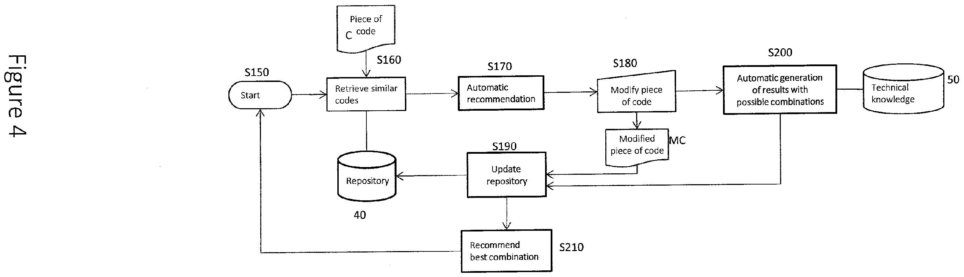

Embodiments may be implemented as a standalone solution or as a module of a bigger system, such as the one described in the European patent application with agent ref: P130588EP00, entitled "A Computer-Implemented Method and System for Comparing the Results on a Plurality of Target Machines of Modification of a Region of Original Code", which is filed in parallel herewith, and incorporated by reference. This European patent application discloses a method and system for extracting pieces of code (or code regions) on target machines using a compiler directive added as an annotation at a local machine, and for modifying the extracted code at the target machines remotely using the local machine. Embodiments herein may implement the recommendation system, shown in Figures 4, 5, 8, 10 and 15 of P130588EP00. Embodiments may also comprise the overall method/system or the local machine shown in these figures and described in the description.

Embodiments may be provided as a module within Cloud Services. In this last scenario a provider may offer not only the cloud service (Infrastructure as a Service/Platform as a Service (IaaS/PaaS) for example) but also the possibility of using the code repository to aid in the development of new code.

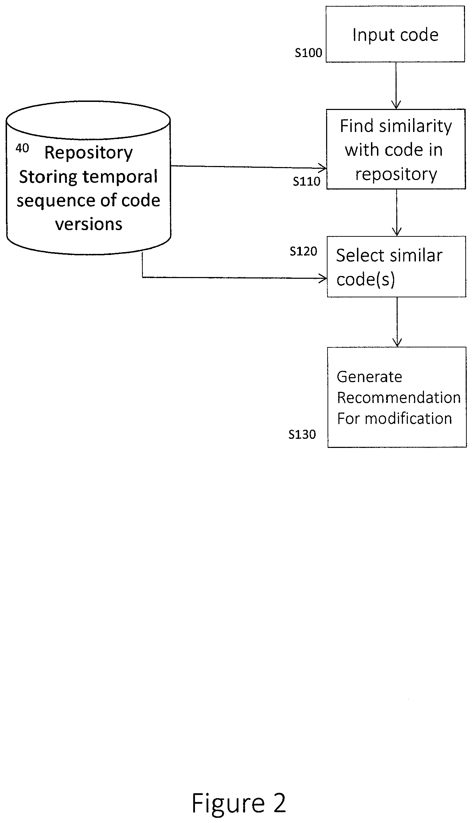

Figure 2 is a flow chart of the method according to an overall embodiment. In the first step S100 a code is input. This may be over a network interface for example or a user interface. If the method is part of a larger method (for example in a computer program carrying out a method which also extracts a piece of code), the input interface may simply be the software instructing transfer of the code from another part of the method/computer program into this part of the method. In step S110 similarity of the piece of code is found with entities stored in a repository. The repository 40 is shown and may be a local repository or a remote repository from which information is retrieved, for example, over the internet such as in a cloud system.

The repository stores entities each comprising an original piece of code and a temporal sequence (or line) of modified versions of the code (hereafter modified code version) over time, each with performance results. Of course the entities may contain further infromation such as execution-time parameters which are useful for comparison with the code for optimisation and environment of the execution.

Using the similarity found in step S110, one or more similar code(s) are selected in step S120. The similarity may be found with an original piece of code of the entity only or the method may search the whole entity including the modified versions. Once the similar codes have been selected, the recommendation is generated in step S130. The recommendation may be based on performance or performance improvement over the previous code version (the code version immediately before the modification being considered for recommendation).

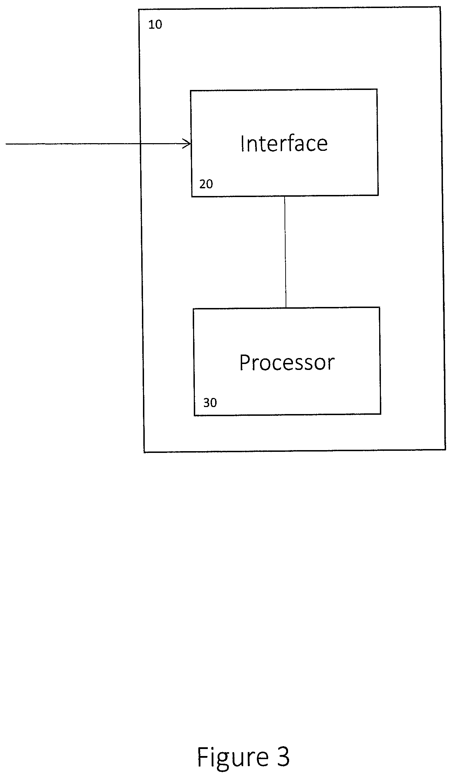

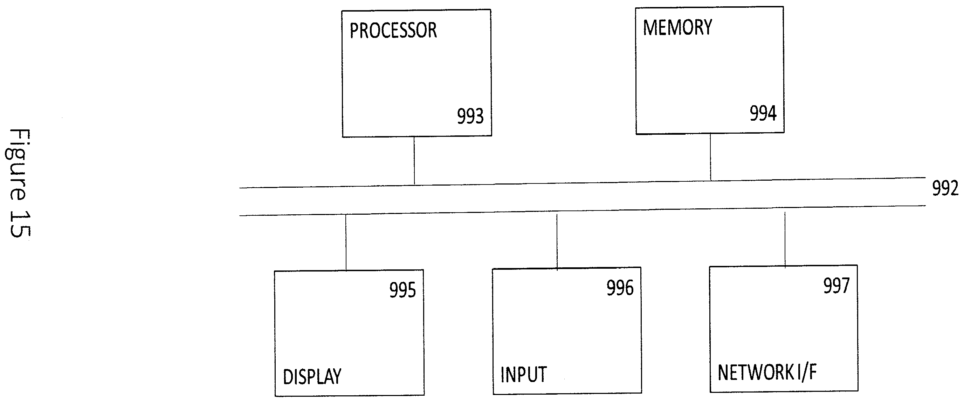

The method is computer implemented and Figure 3 is a block diagram of a computer/machine
10 according to an overall apparatus or system embodiment. The apparatus includes an interface 20 which accepts input of a piece of code for optimisation from the user. The interface may be implemented in software as mentioned above, or it may be a network interface for inputting code over a network, for example the internet or a user interface for direct code input. If the repository 40 is not local, the same interface or a different interface may be used to accept input of code from the repository for the calculation of similarity and generation of recommendations. Apparatus 10 also includes a processor 30 which carries out the similarity calculation, the selection and generates a recommendation, based on the preferred performance results and potentially other factors. Of course apparatus 10 may have other standard computer components, as shown in Figure 15 which is a more detailed diagram of hardware used to implement an embodiment.

Taking machine in the broadest sense of the word as defined above, invention embodiments may be applied to any intelligent devices, e.g.: smartphones, and devices, sensors etc. with intelligence capability (e.g. in the loT scenario the intelligent fridge, the intelligent curtain closer, remote heat control capability etc.) which could act as the machine in this context. Thus embodiments encompass a broader interpretation of machines, and are not limited to the more limited sense of a computer as a desktop-or laptop computers or servers, for example.

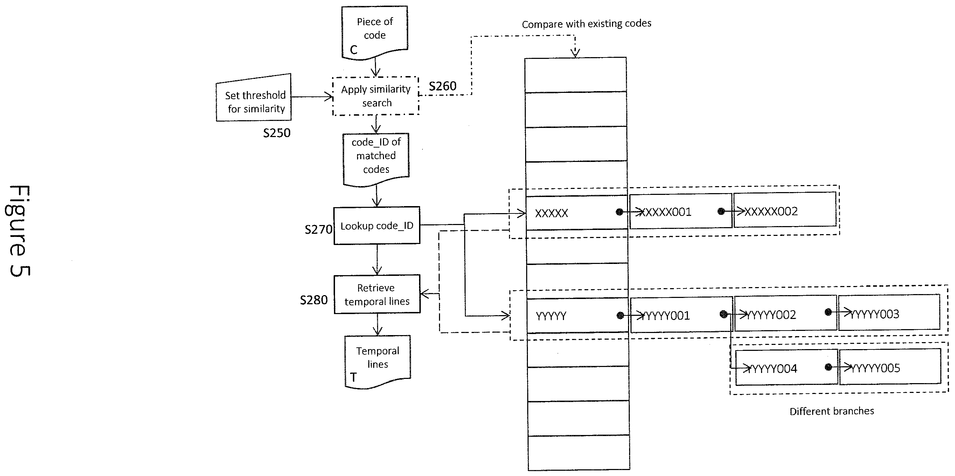

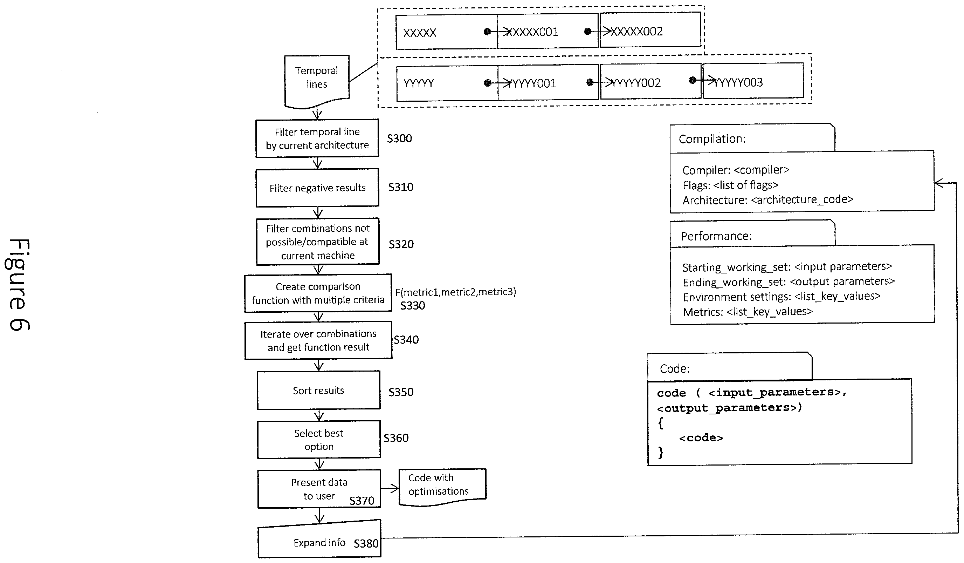

Figure 4 describes the process flow for a more detailed embodiment including updating the repository. The process starts in S150 with a piece of code C that a certain programmer is creating or modifying. Given this piece of code, similar codes are retrieved S160 from the repository 40, as further described in Figure 5. The list of similar codes is then used by the system to automatically generate a recommendation S170 (Figure 6) for the kind of modification the user should apply to the current code.

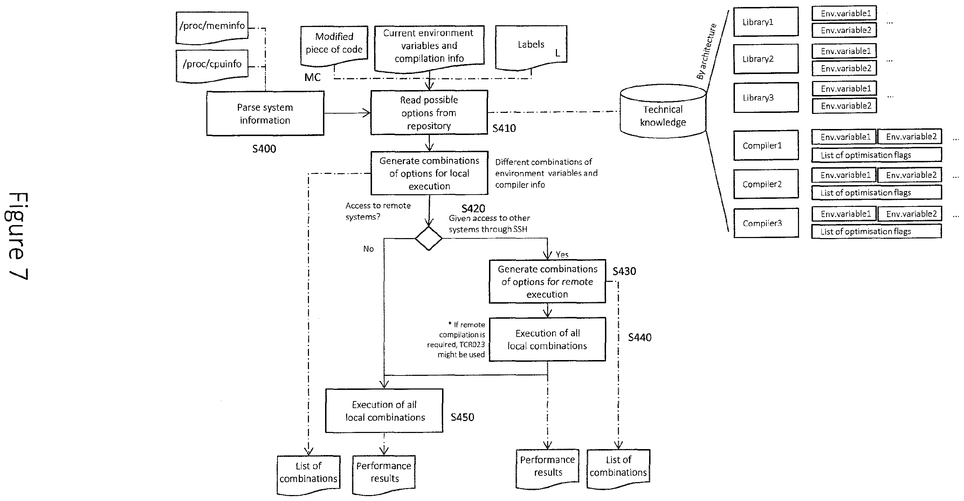

After the user applies said modification to the code (or after it is applied automatically) in S180 to provide modified code MC, the repository may be updated with the new code version in S190. Then, the system automatically generates S200 all posible combinations of available compiler- and execution-time parameters, preferably by using technical knowledge 50, as described in Figure 7, which leads to the creation of multiple entries for the modified code version in the repository, with different performance results, but all related to the same version of the code.

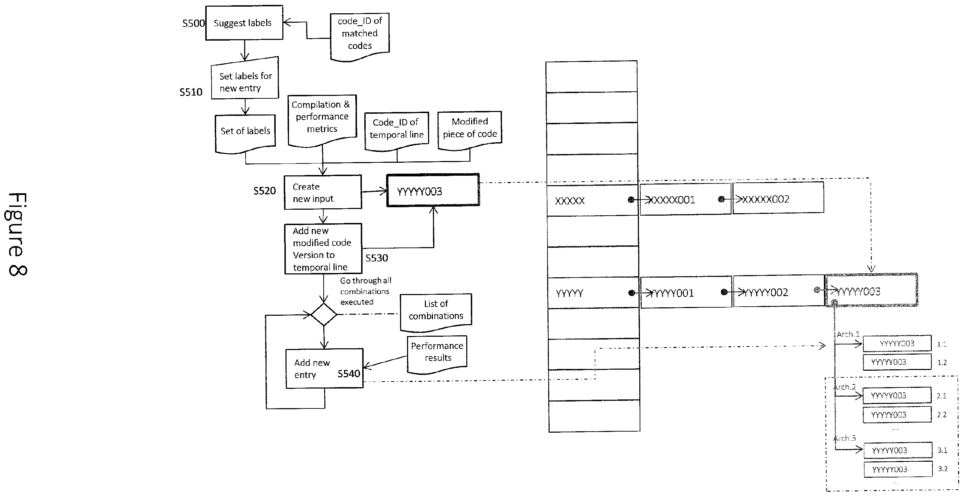

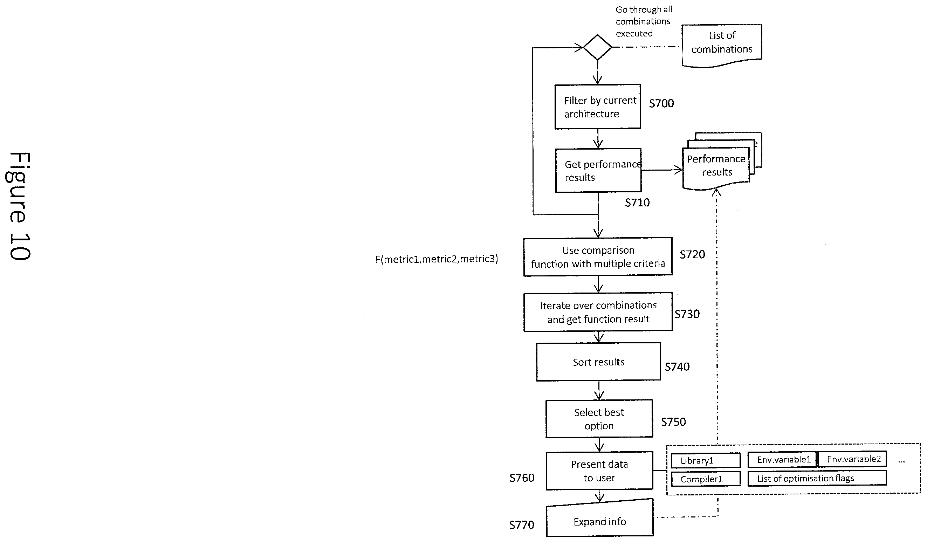

It is assumed that the modified code is executed for each combination (not shown here) to produce the performance results for the entities. These new entries are added to the repository S190 at the end of the temporal sequence corresponding to the original code, as further described in Figure 8 as possible compiler- and execution-time parameters for the new code version stored in S190. In practice, both the new code version and the combinations of parameters could equally be saved to the repository at the same time. Finally, given the performance results of all the different combinations that were automatically generated, the system also provides which combination is the best in terms of its performance or other criteria in S210, as described in Figure 10. This recommendation may be passed to the programmer or automatically adopted.

Figure 5 describes the retrieval process of similar codes. The process starts by setting the threshold for similarity in step S250 and applying a similarity search in step S260 between a piece of code C and existing codes shown to the right of the flow chart. Note that in this example a comparison is with the original code shown as XXXXX or YYYYY, rather than any of the modified versions such as X)CXXX001 and YYYYY001 etc. However, the comparison may additionally be made with the modified versions. Step S260 outputs the code ID of the matched codes (i.e. their identification): this is a basic code ID to which a suffix or additional part is attached for each modified code version. Then by looking up all the similar code IDs (with different suffixes) in step S270 the entire temporal sequence for the entity found in the similarity search is retrieved in S280.

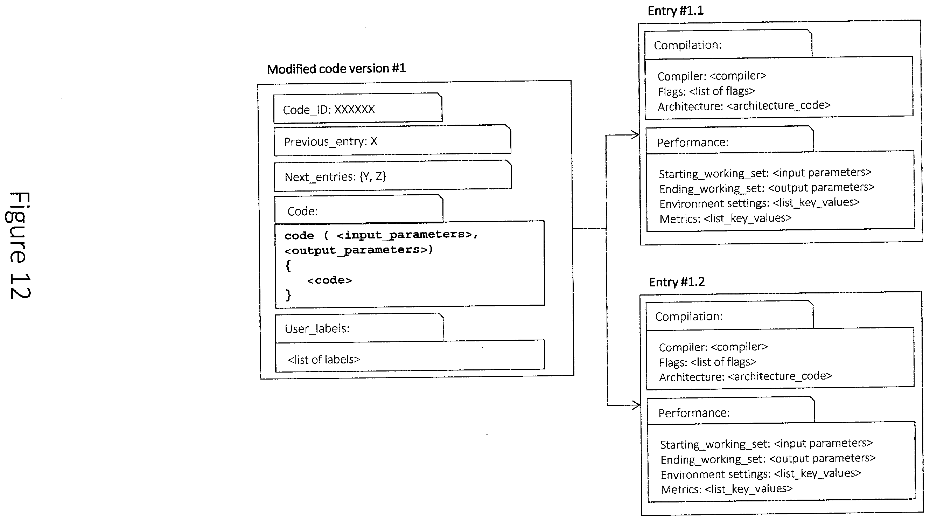

The exact similarity search used to find the similar codes is out of the scope of this document, but makes use of other solutions available to compare and search similar code, such as Prechelt, L., Malpohl, G. and Philippsen, M., 2002. Finding plagiarisms among a set of programs with JPlag. J. UCS, 8(11), p.1016 and B or Aiken, A., 2005. Moss: A system for detecting software plagiarism. University of California-Berkeley. Embodiments make use of the outcome of one of these solutions to retrieve the list of entities, in the form of identifications, IDs of similar codes stored at the repository and the temporal lines (or sequences) corresponding to those codes. Each of these temporal lines contains both the original code and its subsequent modifications, together with the different performance metrics recorded (for each different combination of compiler- and execution-time parameters) and several user-made labels that categorise the modifications done. Figure 12 describes the structure of an entry in the repository. The list of similar codes (including the whole temporal sequence for each similar entity) serves as an input in the following process of automatic recommendation of the best modification to apply to the code.

Figure 6 describes the process to automatically generate a recommendation for the best modification to apply to the current code. This recommendation is given based on multiple criteria, as a result of a function combining many criteria, possibly with different weighted priorities. The criteria may include, for example, performance improvement, memory and power consumption. The process filters the retrieved temporal lines to eliminate results corresponding to other architecture in S300, to remove negative results (which are worse than those of the preceding code version, for example in terms of slower processing or even incorrect outputs) in S310 and to remove the combinations not possible in the current situation in S320, leaving only those results that are compatible and/or possible at the current machine with its current configuration. Thereafter, these results are sorted by multiple criteria by use of a comparison function in S330, and the system iterates over the combinations in S340, sorts the results in S350 and selects the best option in S360, which is presented to the user (or used directly) in S370, in text or graphical format. This way, the system effectively gives programmers well-founded recommendations about which optimisations may work better for their codes. Finally, the user is also able to tell the system to expand this information (S380), which returns the corresponding performance results of the suggested modification, together with the applied compiler-and execution-time parameters. Figure 6 shows expanded information in terms of compilation details, performance details and the code itself.

Once the user has applied the suggested recommendation, and before the new modified code is executed to gather performance results, the system applies an automatic process that effectively leads the repository to be self-populated. This process is described in Figure 7. Based on architecture and environment information about the system parsed in step S400, the modified code MC, the user-labels L, and the current environment and compilation info read from the technical knowledge repository in S410 (including available libraries and compilers and associated variables) the system generates (S420) different combinations of compiler- and execution-time parameters (architecture, compiler, library, flags, environment variables, etc.). For example, if the current machine has 32 cores, and the code is using OpenMP, the system would generate values for the environment variable "OMP)P_NUM_THREADS" from 1 to 32. Taking into account the parameters, and their possible values, listed in the repository of technical knowledge, the system iterates over them to generate different instances of the same code that will be executed at the current machine. Additionally, if the system is configured to have access to remote machines, the system also generates instances for those different machines, which could have different combinations of architectures and/or libraries generated in step S430. Finally, the system executes all different instances in S440 and/or S450, which leads to the generation of multiple performance results for the combinations that are to be added to the repository in the following step.

Figure 8 describes the process of how a new code modification is added to an existing temporal line. Given a modified piece of code, its compilation and different metrics at execution time, the ID of the existing temporal line, and the labels created by the user, a new entry is created and linked to the existing temporal line. For the labelling process, since the modified code is being matched to similar codes, the programmer is given a set of labels from those codes for him to choose (S500) if necessary and then the programmer provides (S510) a set of labels for the new entry.

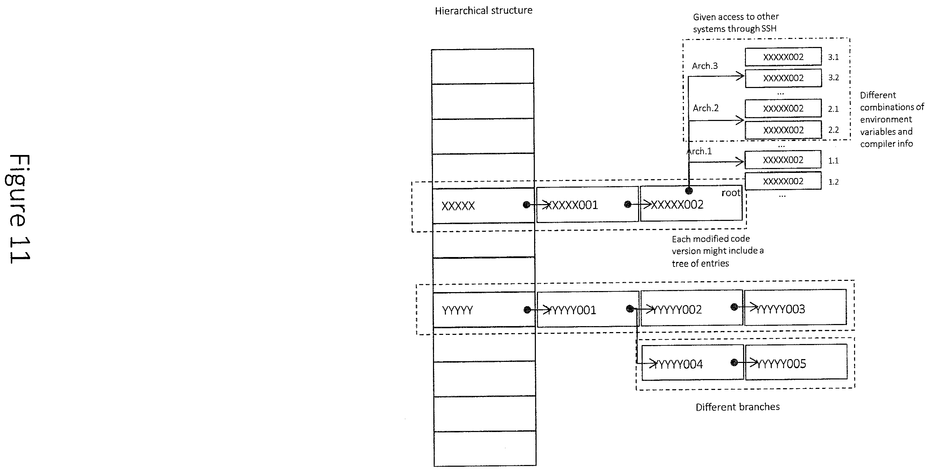

Figure 8 shows combinations for code YYYYY003 code version. There are combinations 1.1 and 1.2 on a first architecture, combinations 2.1 and 2.2 on a second architecture and combinations 3.1 and 3.2 on a third architecture. After initiation of the input for a new code version, S520 (YYYYY003) and given the list of combinations generated in the previous step, and the corresponding performance results, a new related code version is added S530, with an entry for each single combination, appended in S540. Potentially, these new entries may also correspond to different architectures from the one at the current machine. The full entity is stored hierarchically in the repository as shown in Figure 11.

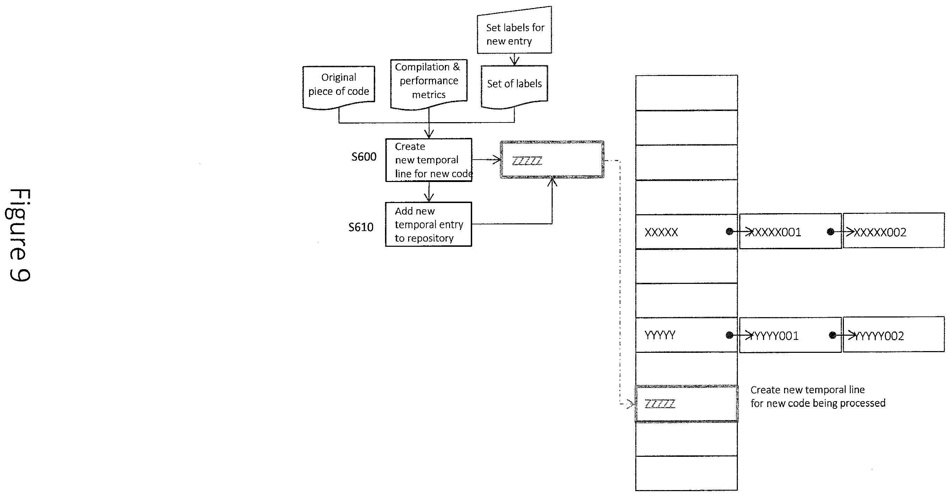

Figure 9 describes the process of creation a new temporal line or entity into the repository. The process is similar to the one described in Figure 8, but the new entity is not linked to an existing temporal line. In step S600 a new temporal line is created for the new code shown as ZZZZZ and then in step S610 the new temporal entity is added to the repository. At this stage only the original code is provided because there have been no modifications yet. However modified code versions are shown for the XXXXX code and the YYYYY code.

Once all the new entries (code versions and their compilation-time and execution-time parameters) are added to the repository, the system also automatically generates the entry with the best combination of compilation-time and execution-time parameters. This process is described in Figure 10. Given the list of combinations, the system takes only those corresponding to the architecture of the current machine of the code for optimisation (filtering in step S700), and gets the performance results (S710). These results are then sorted by a combination of different criteria (S720), using the same comparison function that was created and described in Figure 6, which includes performance improvement, memory and power consumption. After iterating through the combinations (S730) and sorting the results (S740), the best option is selected and presented to the user (S760), who receives the best values for the different compiler-and execution-time parameters, potentially with expanded information (S770) as shown in the figure.

Figure 11 is a more detailed view of the repository structure showing its hierarchy. There are two entities XXXXX and YYYYY depicted, although of course the repository may house many, many entities. For XXXXX there are two modified code versions: XXXXX001 and XXXXX002. A tree structure is shown for XXXXX002 with a root and six different entries, each one corresponding to a different combination of environment variables and compiler information. The different architectures are shown as arch.1, arch.2 and arch.3. This code version therefore was permitted to execute on different architectures for example using SSH (Secure Socket Shell) which is a network protocol providing administrators with a secure way to access remote computers. The entity YYYYY is also shown and illustrates that there may be different branches of modified code versions. Here, YYYYY001 is modified in two different ways to create YYYYY002 and YYYYY004. In turn YYYYY002 is modified to form YYYYY003 and YYYYY004 is modified to form YYYYY005.

Figure 12 depicts the structure followed to keep the information needed for each entity (XXXXX or YYYYY) of the repository. Each modified code version presents the following fields:
- Code_ID: Unique identifier in the repository for each modified code version including a basic code ID associated with the temporal line (i.e., XXXXX etc) and a suffix identifying the version (i.e., 001 etc).
- Previous_code: code ID of the previous related modified code version. As versions are parts of temporal sequences, this field shows the relative order between versions along the same temporal line. This way it is easy to deduce the order of modifications.
- Next_code: code IDs of following versions. This field could have multiple values. Code: This field contains the specific piece of code at a given time (current version)
- For each different combination used with that version, there is an entry with different compiler parameters, execution-time parameters and performance results:
   ∘ Compilation: This field gathers information collected at compile-time, such as the compiler, the different flags used, architecture, etc.
   ∘ Performance: This field gathers information collected at execution-time, such as values of the variables at the beginning and the end of the executed code, the value of certain environmental variables that may modify the execution process, and the different performance metrics, which may include execution time, memory consumption, speed up in relation to the previous entry in the same temporal line, etc.

The information is designed to be implemented and stored in a non-structured database forming the repository, such as Redis, Cassandra or MongoDB, allowing programmers to read the information in an interchangeable format like JSON or XML.

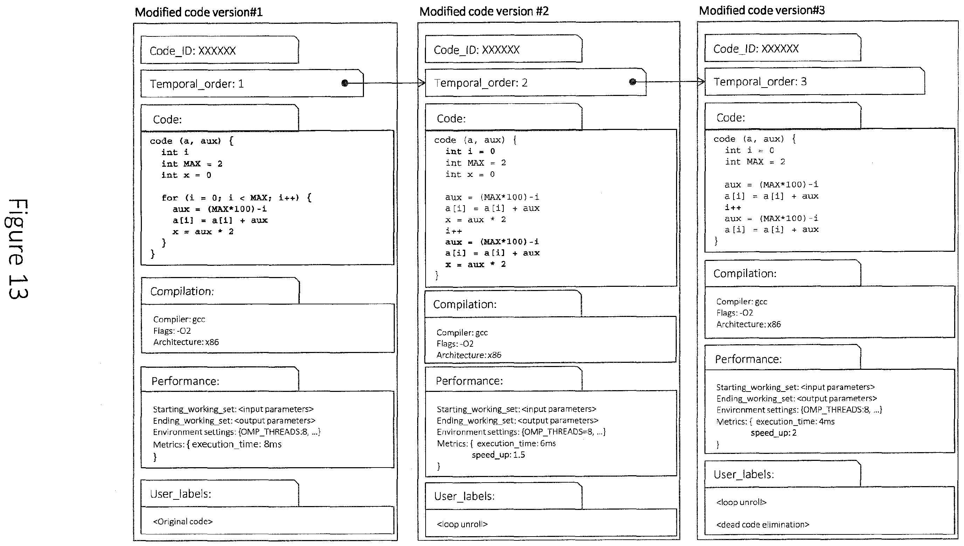

Figure 13 depicts a temporal line in which a piece of a code that contains a loop is transformed twice, applying first a "loop unroll" and later a "dead code elimination". Each modification of the code is attached to the previous one in the sequence, all with the same basic code_ID, which identifies the temporal line, but at a different place in the temporal order and each with a suffix revealing the version/temporal position. Additionally, the transformations applied have been labelled by the programmer, while different performance metrics and compilation-time information have also been added to each entry. These performance metrics also cover the relative performance between different versions of the codes, which gives programmers a hint as to which modification could work better.

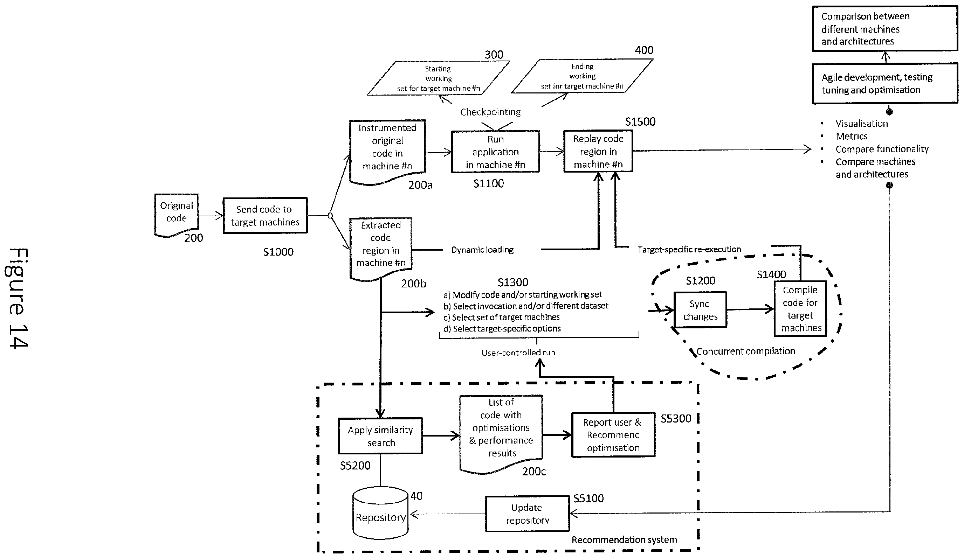

Figure 14 is a block diagram of a code modification process described in European patent application with agent ref: P130588EP00, entitled "A Computer-Implemented Method and System for Comparing the Results on a Plurality of Target Machines of Modification of a Region of Original Code", which is filed in parallel herewith, and incorporated by reference. The method extracts pieces of code (or code regions) on target machines using a compiler directive added as an annotation at a local machine, and modifies the extracted code at the target machines remotely using the local machine. The code modification is one recommended to the user as described herein (or the recommendation may be automatically adopted).

In this code modification process, given an original software code annotated at the local machine with a compiler directive to extract a region of code, one embodiment starts with the distribution of a copy of this code to every target machine in which the code will be tested. Then, at each target machine (and potentially also at the local machine from which the whole process is initiated), this software code is compiled, the compiler directive allowing extraction of the piece/region of code to be modified. Following the recommendation as detailed herein, the user at the local machine may apply several modifications to the code. Then, the embodiment may allow for the re-execution of that particular piece of code at every target machine, transferring the modifications and effectively triggering a specific compilation for each one of them

At every target machine, the state of the program before and after the execution of each invocation of the selected code region (working sets) is captured, which allows the re-execution of each particular invocation, considering the differences that its execution could have at each machine (for example, if the execution flow depends on the architecture underneath). As part of this method, these states may be interactively modified, before re-executing the code, from the local machine, independently of these states being local or remote.

In Figure 14, which is a functional diagram of a code modification process spread across different target machines, original code 200 is sent to the target machines in step S1000. Compilation divides the code into instrumented original code 200a and extracted code 200b. Machine #n is shown to indicate that there are a number of different target machines. The application is executed or (or run which is used as a synonym for executed in this document) in a capture execution in step S1100 with checkpointing to allow the provision of a starting working set for that target machine and an ending working set for that machine.

In order to "replay" the extracted code region on the machine in step S1500 the extracted code is dynamically loaded into the instrumented code. This takes place both in the first checkpointing capture execution and in all subsequent executions for example, in a user controlled run as shown in step S1300 with options a) to d) for example.

The recommendation is used to select one or more options to modify the code. Following modification, the extracted code must be re-compiled in step S1400, (in remote concurrent compilation) before replaying in step S1500. Results across the different machines may be visualised, metrics may be produced, functionality may be compared and this will allow comparison of a different machines and architectures as necessary. These outcomes of the method may permit agile development testing, tuning and optimisation and allow comparison of different machines and architectures.

Turning specifically to the recommendation, a search for similar code to the extracted code 200b is used in S5200 to look in repository 40 of codes 200c in which each entity includes an original code and a temporal sequence of code versions with modifications from the previous version and their performance results. The similarity search gives a list of entities which are similar to the extracted code (usually based on the original code in the entity). Comparison of the performance results of the various code versions in the similar entities allows generation of a recommendation in S5300. This allows a report to the user of the recommendation for use in selecting any of options a) to d). The repository may be updated in step S5100 using the results of the method. In the compilation phase, the code changes in the code (for example using a patch file of the modification) and other parameters (such as choice of compiler) are synchronised to the target machines in step S1200 and the modified code is compiled at the target machines in step S1400 using the compiler parameters sent from the local machine. If different combinations of parameter options are sent to a single target machine, they may be used to populate the repository with both the modified code version (of the extracted code) and its various implementations, along with their results.

Figure 15 is a block diagram of a computing device, such as a data storage server, which embodies the present invention, and which may be used to implement a method of code modification recommendation. The computing device comprises a processor 993, and memory, 994. The computing device also includes a network interface 997 for communication with other computing devices, for example with other computing devices of invention embodiments, or for communicating with repository 40.

For example, an embodiment may be composed of a network of such computing devices. Optionally, the computing device also includes one or more input mechanisms such as keyboard and mouse 996, so that the user may select a recommended modification, look in more detail at the temporal lines of code modifications, or expand information displayed, for example. The device may also include display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the similarity calculation, generation of execution time combinations, and recommendations described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device for use in aiding code modification. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, smayner, trackerball etc may be included in the computing device. The computing device may be one embodiment of the apparatus shown in Figure 3 and may carry out the method shown in Figure 2.

All the methods embodying the present invention may be carried out on a computing device such as that illustrated in Figure 15. Such a computing device need not have every component illustrated in Figure 15, and may be composed of a subset of those components. A method embodying the present invention may be carried out by a single computing device in communication with one or more data storage servers via a network. The computing device may be a data storage itself storing the code for modification and modified code, and possibly also the repository.

A method embodying the present invention may be carried out by a plurality of computing devices operating in cooperation with one another. One or more of the plurality of computing devices may be a data storage server storing at least a portion of the code for modification and modified code, and possibly also the repository.

Embodiments may be applied to any field is which there is a use of source code. Embodiments may be used not only with HPC applications, but also with applications/programs that belong to any other field, since the mechanism described may be applied to any type of software.

Another potential application is use on a cloud environment, offering functionalities as a service. This way, users may access the system described remotely, without having to store the repository locally; users need only upload their codes to the cloud environment, and all processes would be run on the cloud.

Embodiments propose a method in which the combined knowledge and experience from multiple programmers is gathered in a system that aids the development of new codes, or updating of existing ones. As a result, by making use of this functionality, programmers may easily apply modifications to the code that they could not have conceived otherwise, and may leverage the knowledge and experience from past experiences. Moreover, since the temporal evolution of the changes is also stored, together with all the related performance metrics, programmers may grasp a better understanding of their codes, the programming language being used, and general programming practices. Additionally, since the method and system described is able to self-populate the repository by iterating possible combinations of architecture, compiler, library, and environment options, the amount of information to which a developer has access is significant. Therefore, embodiments may increase productivity, and lead to better and contrasted developments, especially in relation to the tuning, optimisation and/or parallelisation tasks.

This system is not static, but grows in time with the contribution of users, in such a way that the more the system is used, the greater the benefits that it provides to them. However, since the system is able to self-populate the repository, for each contribution of a developer, the number of performance results generated with all possible combinations enriches the benefits of the described system.

Embodiments may provide:
- A method and system that automatically recommend a code optimisation to the developer based on historical data, and based on multiple criteria, both collected by previous developers and automatically generated by the system.
- A method and system that allow programmers to access a comprehensive repository in which they may check different source codes, their evolution after certain changes, their performance at execution time, information at compilation time, and the comments and categories from previous programmers.
- A method to keep the temporal evolution of a sequence of modifications of a piece of code, together with additional information (see above) that describes and categorises each particular modification of the original code.
   ∘ This method also allows the storing of both absolute and relative metrics, so different modifications of the same code may be compared.
- A method and system by which, given a certain modification of the code, several combinations of possible architecture-, compiler-, library-, and environment-based options are iterated to generate performance results for each of these combinations, effectively populating the repository.
- A method and system that create multiples of the above combinations based on technical repository and system information.
- A method and system that automatically recommend the best combination of architecture, compiler, library, and compiler- and execution-time parameters to the user.
- A method and system that allow retrieval of not only similar codes to the one being programmed, but also the whole temporal lines of different changes to those codes.
- A method and system to create new entries in the described repository, for both new codes, and additional modifications to an existing code.

### Glossary

**Dataset:** the collection of data, or related sets of information, that is fed into a program. Depending of the dataset, a certain program will behave in one way or another.

**Working set:** the value or state of the variables and data structures used by a program or piece of code to be run.

**HPC:** High Performance Computing
**An Execution time parameter:** any option used to set how a code is run, such as the choice of dynamic library, code implementation, and/or environment options, including number of processes or threads, scheduling policies,etc.

**A Compilation time parameter:** any option used to compile a program, including the choice of compiler, choice of compiler flags, and compiler optimisations.

**Architecture:** the underlying structure of the machine, which may encompass both hardware architecture (all the parts of the machine that are not software, including processor, memory, connecting buses, and peripherals) and software architecture (the lowest levels of the software stack, including the operating system (OS). **Environment:** the lower levels of the software environment, including the OS, compilers, libraries/library links, system settings, etc.

## Claims

1. A computer-implemented method for automatically recommending a code modification, comprising:
loading a piece of code for optimisation;
finding the similarity of the piece of code for optimisation to entities stored in a repository, entities in the repository comprising an original piece of code and a temporal sequence of modified versions of the code over time, each with a performance result;
selecting from the repository one or more entities which are similar to the piece of code for optimisation; and
generating a recommendation for code optimisation by comparing the performance results of the modified code versions in the temporal sequences of the similar entities to find a modification with the best performance results.

2. A method according to claim 1, further comprising:
modifying the code for optimisation using the recommended modification;
generating combinations of compiler and/or execution-time parameters for the modified code;
executing the modified code with the combinations of compiler and/or execution time parameters and monitoring the performance results of the executions;
storing the combinations of compiler and/or execution time parameters and their performance results on the modified code in the repository to create multiple entries for the modified code as multiple entries for a new code version in a temporal sequence; and
recommending a combination of compiler and/or execution time parameters for the modified code which gives the best performance results.

3. A method according to claim 2, wherein the possible different combinations available are selected from any available compiler options, libraries, architectures and environmental variables.

4. A method according to any of the preceding claims, wherein the available different combinations for the modified code execution are retrieved from a technical knowledge repository.

5. A method according to any of the preceding claims, further comprising:
accepting and storing input of a user label for the recommended modification, the user label categorising the modification.

6. A method according to claim 5, further comprising:
suggesting one or more user labels to the user according to user labels of the modifications stored with the selected entities.

7. A method according to any of the preceding claims, wherein:
the recommendation for code optimisation is generated based on a weighted function combining multiple criteria, including performance results or performance improvement results over the previous code version.

8. A method according to any of the preceding claims, wherein:
the performance results or performance improvement results are defined in terms of one or more of execution time, memory usage and power consumption.

9. A method according to any of the preceding claims, further comprising:
filtering the modified code versions of the selected pieces of code before generating the recommendation, to eliminate one or more of: results on architectures different from the architecture on which the code for optimisations executes; and negative results which are worse than those of the preceding code version in the temporal sequence.

10. A method according to any of the preceding claims, further comprising:
adding a new piece of code into the repository by creating a new entity including a piece of code, its compiler and/or execution-time parameters and its performance result.

11. An apparatus for automatically recommending a code modification, comprising:
an interface to load a piece of code for optimisation;
a processor to:
find the similarity of the piece of code for optimisation to entities stored in a repository, entities in the repository comprising an original piece of code and a temporal sequence of modified versions of the code over time, each with a performance result;
select from the repository one or more pieces of code/entities which are similar to the piece of code for optimisation; and
generate a recommendation for code optimisation by comparing the performance results of the modified code versions in the temporal sequences of the similar entities to find a modification with the best performance results.

12. A computer program which when executed on a computer carries out a method according to any of the preceding method claims.

13. A computer-implemented method at a local machine for comparing the results on a plurality of target machines of modification of a region of original code, the method comprising:
annotating a region of original code in a program for extraction with a compiler directive;
distributing the program to the target machines; allowing compilation of code including the original code and the compiler directive, and generation of executable code in the form of extracted code and instrumented code at each target machine, wherein the compiler directive causes the annotated region of the original code to be extracted, stored in a separate file, and linked to a function call at a position in the original code from which the extracted region was extracted;
recommending a code modification for the extracted code according to any of the preceding method claims;
modifying the extracted code according to the recommendation and sending the modification to the target machines, triggering re-compilation of the modified extracted code at each target machine to generate a new executable version of the extracted code in each target machine for dynamic loading into the instrumented program;
receiving from each target machine the results of the target machine executing the instrumented program and dynamically loading and executing the new executable version of the extracted code; and
displaying the results of the target machines to allow determination of the effects of the modification on the results from the different target machines.

14. A local machine operable to compare the results on a plurality of target machines of modification of a region of original code, wherein:
the local machine comprises an apparatus according to claim 11, a user interface and a local network interface controlled by a local processor, wherein:
the user interface is to allow annotation by the user of a region of original code in a program for extraction with a compiler directive;
the user interface is to allow the selection of options sent to the target machines in the form of one or more of the particular invocation of the extracted code, the modification of the starting working set, and the change of the initial dataset of the program; and
the local network interface is to distribute the program from the local machine to the target machines allowing compilation of code including the original code and the compiler directive, and generation of executable code in the form of extracted code and instrumented code at each target machine, wherein the compiler directive causes the annotated region of the original code to be extracted, stored in a separate file, and linked to a function call at a position in the original code from which the extracted region was extracted;
the apparatus according to claim 11 is to recommend a code modification for the extracted code;
the user interface is to allow user modification of the extracted code according to the recommendation, to send the modification to the target machines; and to receive the results of execution at each target machine; and
the user interface is to display the results for comparison by the user.
